# EUROPEAN PATENT SPECIFICATION

(11) **EP 2 191 160 B1**
(45) Date of publication and mention of the grant of the patent: **10.08.2011**
(21) Application number: 08790071.8
(22) Date of filing: 18.07.2008
(51) Int. Cl.: F16D 55/22, F16D 55/227

(54) **PUSHING ELASTIC MEMBER FOR A COMBINED CALIPER**
ELASTISCHES DRUCKGLIED FÜR EINEN KOMBINIERTEN SATTEL
ÉLÉMENT ÉLASTIQUE DE POUSSÉE POUR ÉTRIER COMBINÉ

(30) Priority: 02.08.2007 IT MI20071598
(43) Date of publication of application: 02.06.2010
(73) Proprietor: Freni Brembo S.p.A., 24035 Curno (Bergamo) (IT)
(72) Inventor: CANOVA, Walter, 24010 Sorisole, BERGAMO (IT); TERUZZI, Andrea, I-24061 Albano S. Alessandro Bergamo (IT); RENZI, Davide, I-23481 Annone Brianza Lecco (IT)
(74) Representative: Crippa, Paolo Ernesto
(86) International application number: PCT/IT2008/000490
(87) International publication number: WO 2009/016675

(56) References cited:
- WO-A1-2009/016680
- US-A- 3 767 016
- US-A- 3 835 961
- US-A- 4 784 245
- US-A- 5 038 895
- US-A1- 2005 034 935

## Description

The object of the present invention is an elastic member of a disc brake combined or hydromechanical caliper with automatic recovery of the pad wear. According to a further aspect, the object of the present invention is a disc brake hydromechanical caliper with automatic recovery of the pad wear. According to a still further aspect, the object of the present invention is a piston of a disc brake hydromechanical caliper with automatic recovery of the pad wear. An elastic member and a caliper of this type is known from US3767016.

Generally, the calipers of the above-indicated type operate as hydraulic calipers for service braking, and as mechanical calipers for parking braking.

As regards parking braking, pushing means are provided, which are adapted to exert a pushing action on at least one of the caliper pads, so that the caliper engages the brake disc. Furthermore, actuating means are provided, which are adapted to operate the pushing means so that the latter exert the above-cited pushing action on the pad.

Generally, the actuating means comprise an actuating lever actionable by the vehicle driver, since it is connected, by means of one or more cables, to a lever or pedal inside the vehicle interior compartment. The actuating lever is operatively connected to driving means, which are generally arranged within the caliper, and adapted to convert the lever rotational motion in a motion which has at least one translation component adapted to operate the above-mentioned pushing means.

Generally, the pushing means comprise a piston adapted to slide relative to the caliper body. Upon translating, the piston pushes the respective pad against the disc of the disc brake, thus clamping it, thereby implementing the parking braking. To this aim, it is generally provided that the pushing means comprise a pushing shaft, for example, operatively interposed between actuating means and piston. Such pushing shaft has an end facing the actuating means, and an end adapted to insert in a piston inner recess so as to push the piston against the pad, following the interaction between pushing shaft and actuating means.

It is known to implement the pushing shaft by means of two coupled components to yield a screw/nut screw coupling. Such configuration allows the automatic recovery of the pad wear by creating a pushing shaft having a length which increases proportionally to the wear of the same pad. One of the two pushing shaft components is generally arranged on the actuating means side, interacts with them and can comprise anti-rotation means. The other component is arranged on the piston side, by inserting in an inner recess of the same. An elastic pushing member is interposed between the piston and this component associated to the piston, so as to exert, on such component, a thrust towards the same piston and towards the disc.

Such configuration has some drawbacks, since the presence of such elastic member requires the presence and installation of a check ring housed in a piston seat. The presence of such check ring bears on both on the product cost per se, and the time required for the assembling thereof, therefore the assembling cost.

Furthermore, the same shape of such elastic member can generate an asymmetric thrust, with the risk for stick-slips of the component associated to the piston.

Therefore, object of the present invention is to provide an elastic member of a disc brake hydromechanical caliper with automatic recovery of the pad wear, which has a reduced number of members and reduced assembling problems.

These and other objects are achieved by means of an elastic member of a disc brake hydromechanical caliper with automatic recovery of the pad wear according to claim 1; a disc brake hydromechanical caliper with automatic recovery of the pad wear according to claim 17; and a piston of a disc brake hydromechanical caliper with automatic recovery of the pad wear according to claim 14. Each dependant claim defines a possible embodiment of the elastic member, hydromechanical caliper, or piston.

In order to better understand the invention, and appreciate the advantages thereof, some exemplary, nonlimiting embodiments thereof will be described herein below, with reference to the annexed Figures, in which:

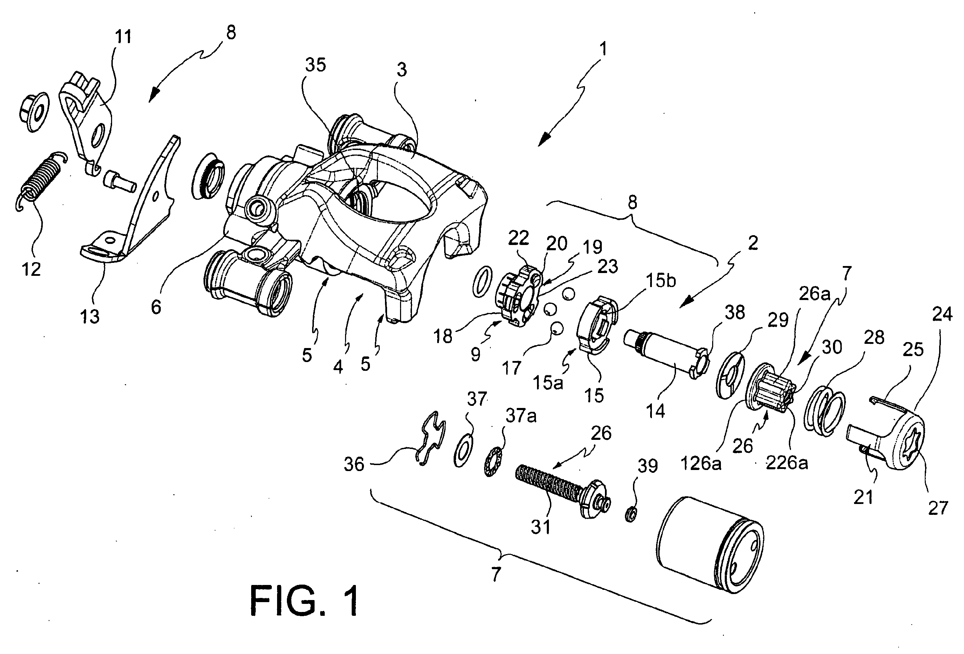

Fig. 1 is an exploded, perspective, schematic view of a caliper provided with an elastic member according to the invention;

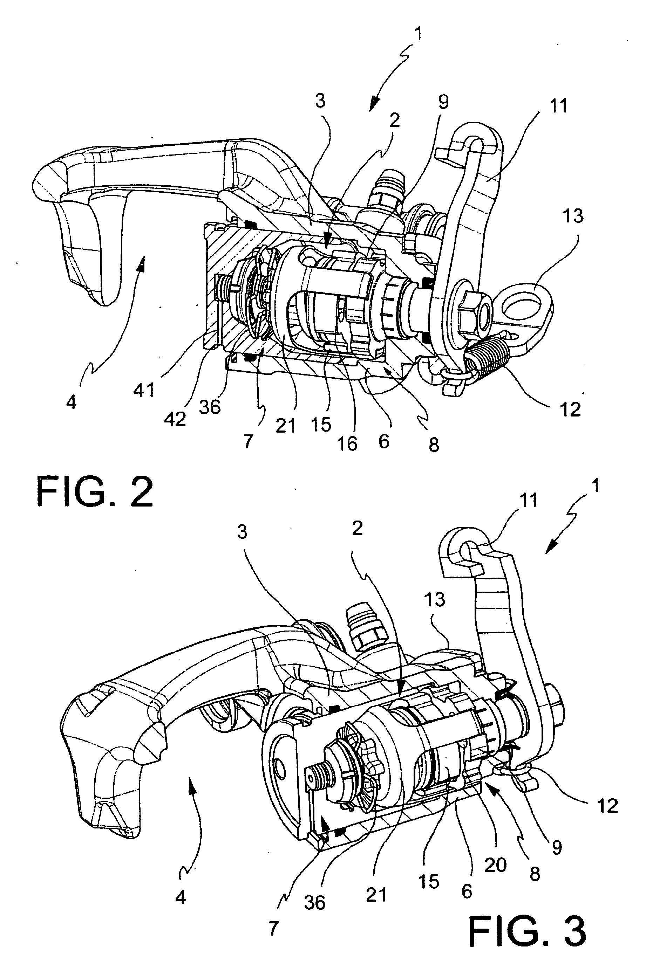

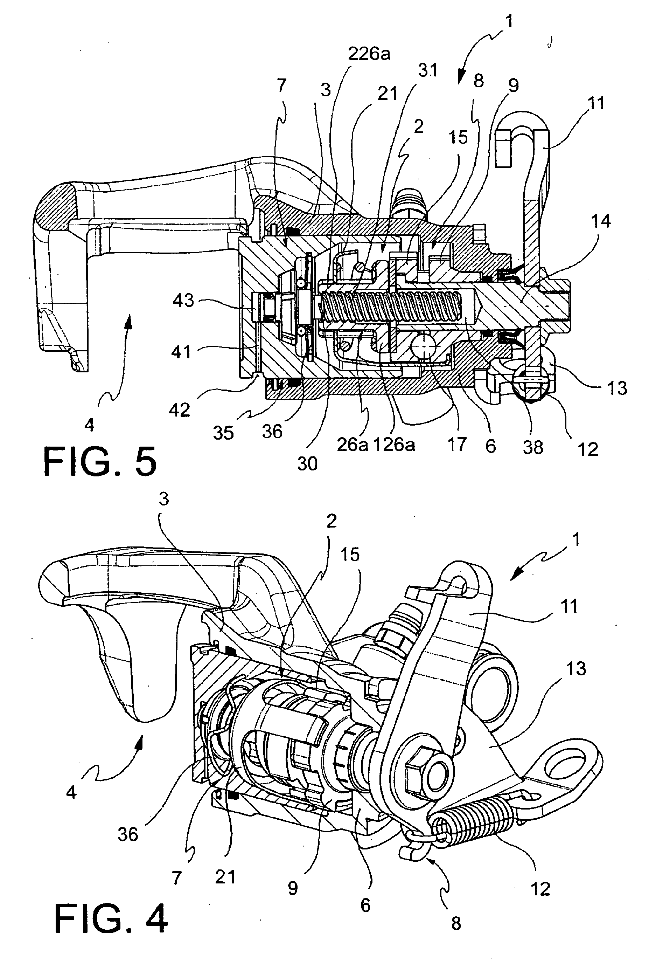

Figs. 2-4 are perspective, partially sectional, schematic views of the brake caliper of Fig. 1 according to different angles;
Fig. 5 is a schematic sectional view of the brake caliper of Fig. 1;
Figs. 6 and 7 are perspective, partially sectional, schematic views of some details of the caliper in Fig. 1;
Fig. 8 is a schematic side view of the details of Fig. 6 or 7;
Fig. 9 is a schematic, perspective view and with separated parts of the details in Fig. 6 or 7;
Fig. 10 is a front schematic view of a detail of the caliper in Fig. 1;
Fig. 11 is a perspective, schematic view of the detail in Fig. 10;
Fig. 12 is a schematic side view of the detail in Fig. 10.

With reference to the Figures, a caliper for a vehicle disc brake is generally indicated with the reference number 1. The caliper 1, being preferably, but not necessarily, of the floating type, comprises a parking device 2 adapted to carry out a parking braking action of the vehicle, being able to be operated by the vehicle driver, for example, by actuating the so-called hand brake. Preferably, the caliper 1 is so shaped as to be able to perform, besides the parking braking, also the service braking action, that is, the braking action which is applied on the moving vehicle, for example, by actuating the brake pedal.

The caliper 1 comprises a body 3 defining a disc space 4 which is adapted to at least partially receive a brake disc (not shown in the Figures) associated to a vehicle wheel. On at least one, preferably on both the disc space 4 sides, the body 3 defines pads seats 5 adapted to receive one or more pads (not shown in the Figures) suitable to engage the brake disc, by clamping it and thereby implementing the braking action.

The parking device 2 comprises a main supporting body 6 which is preferably manufactured in a single piece with the body 3 but which, alternatively, could be separated therefrom, and connectable thereto.

The parking device 2 comprises pushing means 7 adapted to exert a pushing action on at least one of the caliper 1 pads so that the caliper engages the brake disc.

The parking device 2 further comprises actuating means 8 adapted to operate the pushing means 7, so that the latter exert the above-cited pushing action on the pad, and a reaction portion 9, for example, a reaction member 9 which preferably is connected or connectable to the actuating device 2 main supporting body 6 at a supporting portion 10 thereof. Such reaction member 9 is suitable to cooperate with the actuating means 8 so that the latter can perform the pushing means 7 actuation. The cooperation modes between reaction member 9 and pushing means 7 will be set forth in detail herein below.

In accordance with an embodiment, the parking device 2 actuating means 8 comprise an actuating lever 11 connectable, for example, to a hand brake lever within the vehicle (not shown in the Figures). The actuating lever 11 is connected to the main supporting body 6 so as to be able to perform rotations, and preferably slight translations, relative to it. The actuating lever 11 can change from a rest position, corresponding to the lowered hand brake position (absence of parking braking), to an operative position, corresponding to the lifted hand brake position (presence of the parking braking). A return spring 12 can be connected to the actuating lever 11, which is adapted to elastically stress the actuating lever towards the rest position. Such return spring 12 acts between the actuating lever 11 and the main supporting body 6, or a portion of a device integral thereto, for example, a contrast member 13 removably connected to the main supporting body 6.

In accordance with a possible embodiment, the actuating means 8 comprise an actuating shaft 14 capable to rotate and/or slide relative to the main supporting body 6. The actuating shaft 14 is advantageously integrally connected upon rotating with the actuating lever 11.

In accordance with a possible embodiment, the actuating means further comprise a main cup 15. In accordance with a possible embodiment, the main cup 15 is separated from the actuating shaft 14, and connected or connectable thereto in a rotatably integral manner. In this case, the main cup 15 is preferably made of sinterized steel, while the actuating shaft 14 is preferably made of pressed steel.

In accordance with an embodiment, the main cup 15 comprises a cooperation side 15a, advantageously provided with rolling seats 16 adapted to at least partially receive rolling bodies, preferably balls, 17 and a to make them to roll therein, and a check side 15b opposite the cooperation side 15a, and preferably facing the pushing means 7.

According to an embodiment, the reaction member 9 comprises a reaction cup 18 facing the main cup 15. Advantageously, the reaction cup 18 comprises a cooperation surface 19 which, in turn, comprises rolling seats 20 suitable to at least partially receive the balls 17 and to allow a rolling thereof within the rolling seats 20. Therefore, the balls 17 are interposed between the main cup 15 and the reaction cup 18, being housed concomitantly in the respective rolling seats 16 and 20 thereof. With further advantage, main cup 15 the rolling seats 16 and the reaction cup 18 rolling seats 20 are shaped so that, when the balls 17, interposed between the caps 15 and 18, concomitantly roll in such rolling seats 16 and 20, main cup 15 and reaction cup 18 are urged to spread apart. Such rolling is triggered by the main cup 15 rotation, which, in turn, is operated by the actuating lever 11 through the actuating shaft 14. As a result, the actuating shaft 14 - main cup 15 assembly rotationally translates relative to the reaction member 9 connected to the main supporting body 6.

In accordance with an embodiment, the reaction member 9 reaction cup 18 forms means for the connection with a supporting device 21 adapted to support the pushing means 7. For example, the reaction cup 18 can form radically projecting portions 22 which define connecting seats 23 therebetween for the reaction member 9 connection with the supporting device 21, for example, by elastic legs 25 of a cage 24 which is snap-connectable to the reaction cup 18. In this manner, the cage 24 reaction member 9 turn out to be mutually integrally connected upon rotating and translating. Advantageously, the cage 24 supports a pushing shaft 26 operatively connected to the main cup 15. Such pushing shaft 26 is free to slide relative to the cage 24, upon interaction with the main cup 15. As it shall be apparent to those skilled in the art, the main cup 15 rototranslation, which is triggered according to the modes described by the actuating lever 11 rotation, results in a translation of the pushing shaft 26, which translates, thus moving away from the reaction member 9, that is, thus approaching to the disc space 4.

Between the cage 24 and the pushing shaft 26, a contrast spring 28 can act so arranged as to elastically urge the pushing shaft 26 towards the main cup 15.

In order to reduce the friction torques due to the relative rotations between main cup 15 and pushing shaft 26, means anti-friction can be arranged therebetween, for example, a Teflon-coated fifth wheel 29.

In accordance with a possible embodiment, at least one pushing shaft 26 portion is integral upon rotation with the cage 24. To this aim, anti-rotation means are provided in which, for example, the cage 24 defines a shaft seat 27 having an outline which is essentially complementary to the outline of a pushing shaft 26 portion, for example, an outline provided with a plurality of lobes, which is adapted to implement a shape-coupling between pushing shaft 26 and cage 24.

A pushing shaft 26 end opposite the main cup 15 inserts into a piston 34 recess 33, so as to push it against the pad, upon the action exerted by the actuation means on the pushing shaft.

In accordance with a possible embodiment, the pushing shaft 26 is obtained by means of two coupled components to form a screw/nut screw coupling, in order to allow the pad wear automatic recovery by creating a pushing shaft 26 of a length which increases proportionally to the pad wear.

A first component of the pushing shaft 26, arranged on the actuating means side 8, interacts with them and preferably comprises the above-mentioned anti-rotation means associated, for example, to the cage 24. The other component is arranged on the piston side 34, and inserts into the recess 33 with interposition of an elastic pushing member 36 adapted to exert a thrust on such component towards the same piston and the disc space 4.

With particular reference to the embodiment illustrated in the Figures, the pushing shaft 26 comprises a bush 26a arranged on the actuating means 8 side and defining the above-mentioned first component. Such bush 26a comprises a base portion 126a adapted to define a supporting and abutment member for the contrast spring 28, and a supporting surface for the fifth wheel 29, where present. The bush 26a further comprises a shaped portion 226a adapted to pass through the cage 24 shaft seat 27, for example, thus implementing the above-mentioned shape-coupling. In accordance with the previously described embodiment, the shaped portion 226a has a counter-shaped section with the shaft seat 27, for example, a lobe-shaped section.

The bush 26a further defines a threaded seat 30 adapted to receive a threaded pin 31 which defines the above-mentioned pushing shaft 26 second component. The threaded seat 30 can be advantageously through portion, thus opening onto both ends of the bush 26a, on the actuating means side 8 and the piston side 34, respectively.

At the threaded pin 31 end facing the disc space 4 and the piston 34, a pushing head 32 can be provided which is adapted to fit in a corresponding head seat 33a of the piston 34 recess 33. In accordance with a possible embodiment, the pushing head 32 has higher radial or transversal dimensions than the threaded pin 31, and preferably comprises a frusto-conical portion 32a adapted to abut against a corresponding head seat 33a frusto-conical portion 33b. Furthermore, a front axial enlargement 32b can be advantageously provided, which is adapted to insert in a corresponding cylindrical front portion 33c of the head seat 33a, for example, by interposition of a seal ring 39. Preferably, the front axial enlargement 32b has lower transversal or radial dimensions than the frusto-conical portion 32a and, as a result, the head seat 33a cylindrical front portion 33c has lower transversal or radial dimensions than the head seat 33a frusto-conical portion 33b.

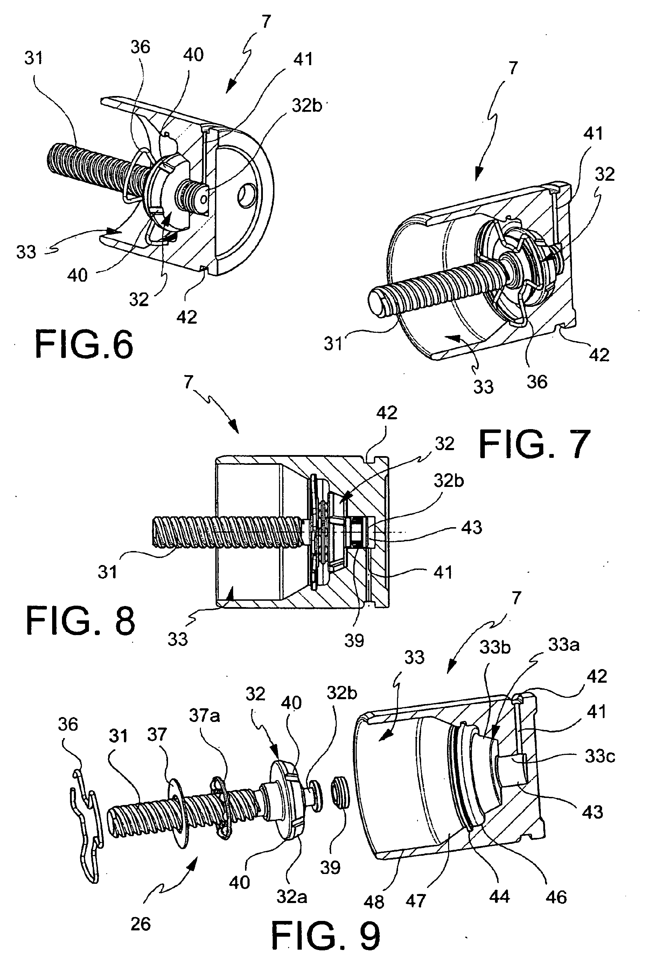

In accordance with a possible embodiment, the pushing head 32 and, un particular, the frusto-conical portion 32a, has at least one notch 40 (Figs. 6-9) opening onto both sides facing the actuating means 8 and the disc space 4, respectively. According to the embodiment illustrated for example in the Figures, more notches 40 are provided, preferably distributed along the frusto-conical portion side surface.

The piston 34 is mounted on the caliper 1 so as to be able to slide within a piston seat 35 defined by the main supporting body 6. In accordance with a possible embodiment, the elastic pushing member 36 acts between pushing head 32 and piston 34, keeping the pushing head 32 pressed in the head seat 33a

Thanks to such configuration, the pushing shaft 26 translation results in a translation of the piston 34 which interacts with at least one of the above-cited pads, thus being pushed against the brake disc housed in the disc space 4. The pushing shaft 26 and, particularly, the threaded pin 31 shape plays the advantageous function to recover the clearances due to the wearing of the pads, which clearances are compensated by rotations thereof within the bush 26a threaded seat 30. As a result, the pushing head 32 can rotate relative to the elastic pushing member 36.

According to a possible embodiment, in order to decrease the friction torques due to the relative rotations between elastic pushing member 36 and pushing head 32, anti-friction means are interposed between the latter, for example, a washer 37 and/or a bearing 37a.

In order to reduce the parking device 2 overall dimensions, the actuating shaft advantageously comprises a hole 38 adapted to at least partially receive the threaded pin 31.

In accordance with a possible embodiment, the recess 33 internally defined by the piston 34, beside at least partially receiving the pushing means 7, is suitable to be filled with a pressurized liquid, so that the piston 34 can be hydraulically operated as well, that is, for the service braking action, actuatable for example by depressing the brake pedal.

According to such embodiment, the piston 34 can advantageously comprise a compensating duct 41 opening onto the recess 33, on a side, and on the piston outer surface, on the other side, preferably at an annular seat 42 adapted to receive an end of a non-shown dust cover. Preferably, the compensating duct 41 opens out in the recess 33 at the cylindrical front portion 33c of the head seat 33a, in a chamber 43 defined by the axial front enlargement 32b of the pushing head 32, where provided.

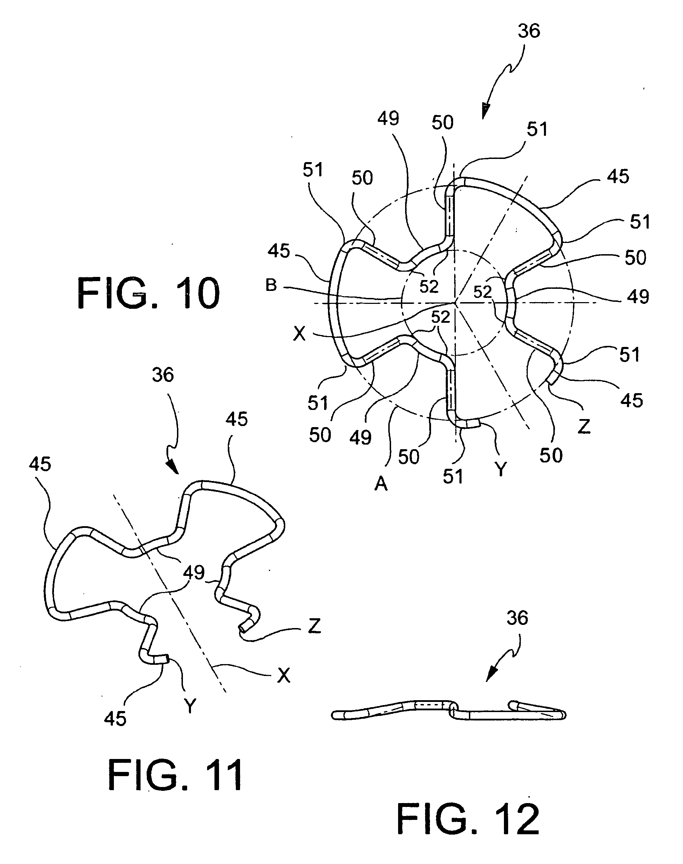

In accordance with a possible embodiment, with reference to the Figs. 9-12, the piston 34 recess 33 has a notch 44 which is adapted to receive at least one attachment portion 45 of the elastic pushing member 36. Such notch 44 is advantageously arranged upstream the head seat 33a according to the translation direction upon braking of the parking device. According to the embodiment illustrated in the Figures, the notch 44 has a continuous annular shape, but a discontinuous annular notch can be also provided, which is complementary to the elastic pushing member 36 shape, as it will be described by way of example herein below.

In accordance with a possible embodiment, the recess 33 has a preferably cylindrical connection portion 46 arranged between annular notch 44 and head seat 33a.

According to a possible embodiment, the recess 33 has a preferably frusto-conical inserting portion 47 arranged upstream the annular notch 44 according to the translation direction upon braking of the parking device. Optionally, an inlet portion 48 can be provided still more upstream, for example, an essentially cylindrical inlet portion.

In accordances with a possible embodiment, the elastic pushing member 36 comprises at least one attachment portion 45 adapted to directly insert in the notch 44, as a result avoiding the presence of check rings. Advantageously, the elastic pushing member 36 further comprises at least one active portion 49 extending from the attachment portion 45 and which is adapted to abut upon pushing on the threaded pin 31, particularly on the pushing head 32, where present. Advantageously, the elastic pushing member 36 further comprises at least one elastic portion 50, in the strict sense of the word, interposed between attachment portion 45 and active portion 49.

In accordance with a possible embodiment, attachment portion 45 and active portion 49 have a circumferential extension around an axial direction X which, in the assembled configuration of the caliper, coincides with a translation direction of the parking device 2.

Preferably, attachment portion 45 and active portion 49 are arranged at different levels, with reference to the axial direction X, and the elastic portion 50 advantageously extends according to an inclined direction relative to the axial direction X.

According to a possible embodiment, attachment portion 45 and active portion 49 have different transversal or radial dimensions as regards the axial direction X which, in the assembled configuration of the caliper, coincides with a translation direction of the parking device 2. Particularly, the attachment portion 45 has a higher transversal or radial dimensions than the active portion 49 transversal or radial dimensions. Particularly, attachment portion 45 and active portion 49 at least theoretically define two circumferences A, B of a different diameter. In other terms, according to the two above-described embodiments, the elastic pushing member 36 shape at least theoretically defines a frusto-conical surface along the axial direction X.

In accordance with an advantageous embodiment, the elastic pushing member 36 is implemented by an extended body, for example a metal wire, sheet, or web, which is folded to obtain attachment portion 45, elastic portion 50, and active portion 49. Particularly, two or more attachment portions and two or more active portions are provided which are formed sequentially along the extended body around the axial direction X, that is, circumferentially distributed around the axial direction X, and interspersed with respective elastic portions.

Advantageously, each active portion 49 has an arched extension preferably, lying on a single circumference. Advantageously each attachment portion 45 has an arched extension preferably lying on a further single circumference which is larger than the circumference which the active portions 49 lie on.

Advantageously, the elastic portions have a rectilinear extension.

In accordance with a possible embodiment, the extended body comprises first connecting lengths 51 interposed between an attachment portion 45 and an elastic portion 50, and second connecting lengths 52 interposed between an elastic portion 50 and an active portion 49.

In accordance with a possible embodiment, the extended body has distinct -that is not matching- ends Y and Z, which are preferably arranged at a preset distance. According to the example illustrated in the Figures, the two ends Y and Z are arranged at an attachment portion, which in this manner turns out to be partially interrupted.

From the description given above, those skilled in the art will be able to appreciate how the parking device according to the invention at least partially solves the drawbacks cited with reference to the prior art.

Particularly, those skilled in the art will be able to appreciate how the elastic pushing member shape and configuration allow reducing the number of components required, by omitting a check ring. Furthermore, the elastic pushing member allows a homogeneous distribution of the thrust on the head, thus eliminating the risks for stick-slip of the threaded pin.

The piston shape also promotes the elastic pushing member assembling, by allowing a direct insertion, without the need to use check rings, for example, further promoted by the conical shape of an insertion portion of the inner recess to the same piston.

It shall be apparent that variations and/or additions relative to what has been described and illustrated above can be provided.

For example, the elastic pushing member can be implemented by a folded and cut sheet.

According to a possible embodiment, the piston notch 44 has a discontinuous annular shape which is adapted to receive the elastic pushing member active portions.

Furthermore, the elastic portions 50 can be implemented by arcs of circumference.

To the embodiments described above, those skilled in the art, with the aim of meeting contingent, specific need, will be able to make a number of changes, modifications, or replacements of elements with functionally equivalent others, without for this departing from the scope of the following claims.

## Claims

1. An elastic pushing member (36) of a disc brake combined or hydromechanical caliper (1) with automatic recovery of the pad wear, said elastic pushing member (36) being adapted to be interposed between a piston (34) of said caliper (1) and a component (31) of a pushing shaft (26), said elastic pushing member (36) further comprising:
- at least one attachment portion (45),
- at least one active portion (49) extending from the attachment portion (45),
- further comprising at least one elastic portion (50), in the strict sense of the word, interposed between attachment portion (45) and active portion (49),
- the attachment portion (45) and the active portion (49) have a circumferential extension around an axial direction (X) which, in the assembled configuration of the caliper, coincides with a translation direction of a parking device (2),
**characterized in that**
- each active portion (49) has an arched extension lying on a single circumference, and
- each attachment portion (45) has an arched extension lying on a further single circumference which is larger than the circumference which the active portions (49) lie on.

2. The elastic pushing member (36) according to claim 1, wherein the attachment portion (45) and the active portion (49) are arranged at different levels relative to the axial direction (X), and the elastic portion (50) advantageously extends according to an inclined direction relative to the axial direction (X).

3. The elastic pushing member (36) according to claim 1 or 2, wherein the attachment portion (45) and the active portion (49) have different transversal or radial dimensions compared to the axial direction (X).

4. The elastic pushing member (36) according to claim 3, wherein the attachment portion (45) has a higher transversal or radial dimension than the transversal or radial dimension of the active portion (49).

5. The elastic pushing member (36) according to one of the claims 1 to 4, wherein the attachment portion (45) and the active portion (49) define two circumferences (A, B) of a different diameter.

6. The elastic pushing member (36) according to one of the preceding claims, wherein the elastic pushing member (36) shape at least theoretically defines a frusto-conical surface along an axial direction (X) which, in the assembled configuration of the caliper, coincides with a translation direction of a parking device (2).

7. The elastic pushing member (36) according to one of the preceding claims, wherein the elastic pushing member (36) is implemented by a folded extended body and/or. wherein the elastic pushing member (36) is implemented by an extended body selected from a metal wire, sheet, or web and/or wherein two or more attachment portions (45) and two or more active portions (49) are provided, which are formed sequentially along the extended body around an axial direction (X), and interspersed with respective elastic portions (50).

8. The elastic pushing member (36) according to claim 7, wherein two or more attachment portions (45) and two or more active portions (49) are provided, which are formed sequentially along the extended body, and interspersed with respective elastic portions (50), and circumferentially distributed around an axial direction (X).

9. The elastic pushing member (36) according to one of the claims 7 to 8, wherein each active portion (49) has an arched extension preferably lying on a single circumference (B).

10. The elastic pushing member (36) according to claim 9, wherein each attachment portion (45) has an arched extension preferably lying on a single circumference (A), which is higher than the circumference on which the active portions (49) lie on.

11. The elastic pushing member (36) according to claim 9 or 10, wherein the elastic portions (50) have a rectilinear extension.

12. The elastic pushing member (36) according to one of the claims 7 to 11, wherein the extended body comprises at least one first connecting length (51) interposed between an attachment portion (45) and an elastic portion (50), and at least one second connecting length (52) interposed between an elastic portion (50) and an active portion (49).

13. The elastic pushing member (36) according to one of the claims 7 to 12, wherein the extended body has distinct ends (Y, Z) and/or wherein the extended body ends (Y, Z) are arranged at a preset distance and/or wherein the two ends (Y, Z) are arranged at an attachment portion (45), which therefore turns out to be partially interrupted.

14. Piston (34) of a disc brake combined or hydromechanical caliper (1) with automatic recovery of the pad wear, said piston comprising an elastic pushing member (36) according to at least one of the claims 1-13.

15. Piston (34) according to claim 14, wherin said piston has a recess (33) which is adapted to receive an end of a pushing shaft (26) component, wherein said recess (33) has a notch (44) adapted to receive at least one attachment portion (45) of the elastic pushing member (36).

16. The piston (34) according to claim 15, wherein the notch (44) has a continuous annular shape.

17. A combined or hydromechanical caliper (1) of a disc brake with automatic recovery of the pad wear, comprising piston (34) according to one or more of the claims 14 to 16.

18. The caliper (1) according to claim 17 comprising a pushing means (7) threaded pin (31), wherein at the threaded pin (31) end facing a disc space (4) and the piston (34), a pushing head (32) is provided which is adapted to engage in a corresponding head seat (33a) of the piston (34) recess (33).

19. The caliper (1) according to claim 17 or 18, wherein the pushing head (32) has higher radial or transversal dimensions than the threaded pin (31), and preferably comprises a frusto-conical portion (32a) adapted to abut against a corresponding frusto-conical portion (33b) of the head seat (33a), and/or
wherein said pushing head (32) comprises an axial front enlargement (32b) adapted to insert in a corresponding cylindrical front portion (33c) of the head seat (33a) by interposition of a seal ring (39), and/or
wherein said axial front enlargement (32b) has lower transversal or radial dimensions than the frusto-conical portion (32a), and the head seat (33a) portion cylindrical front (33c) has lower transversal or radial dimensions than the head seat (33a) frusto-conical portion (33b).

20. The caliper (1) according to one of the claims 17 to 19, wherein a pushing head (32) and, particularly, a frusto-conical portion (32a) of the threaded pin (31) has at least one notch (40) opening onto both sides.

21. The caliper (1) according to one of the claims 17 to 20, wherein the elastic pushing member (36) acts between pushing head (32) and piston (34), keeping the pushing head (32) pressed in the head seat (33a), and/or anti-friction means are interposed between elastic pushing member (36) and pushing head (32), for example, a washer (37) and/or a bearing (37a).

22. The caliper (1) according to one of the claims 17 to 21 comprising an actuating means (8) actuating shaft, wherein said actuating shaft comprises a hole (38) adapted to at least partially receive the threaded pin (31), and/or comprising a pushing means (7) pushing shaft (26), wherein said pushing shaft comprises a bush (26a) provided with a seat (30) for a threaded pin (31), said seat (30) opening onto both sides of said bush (26a).

23. The elastic pushing member (36) according to claim 1 or 9 or 10, wherein the elastic portions (50) have a circumference arc-shaped extension.

24. The elastic pushing member (36) according to claim 1, wherein the at least one attachment portion (45) is adapted to directly insert in a notch (44) of the piston (34).

## Patentansprüche

1. Elastisches Drückelement (36) für einen kombinierten oder hydromechanischen Scheibenbremssattel (1) mit automatischem Ausgleichen des Belagverschleißes,
wobei das elastische Drückelement (36) dazu geeignet ist, zwischen einem Kolben (34) des Bremssattels (1) und einer Komponente (31) einer Drückwelle (26) angeordnet zu sein,
wobei das elastische Drückelement (36) ferner umfasst:
- wenigsten einen Befestigungsabschnitt (45),
- wenigstens einen aktiven Abschnitt (49), welcher sich von dem Befestigungsabschnitt (45) erstreckt,
- ferner umfassend wenigstens einen elastischen Abschnitt (50), im eigentlichen Sinne des Wortes, welcher zwischen dem Befestigungsabschnitt (45) und dem aktiven Abschnitt (49) angeordnet ist,
- wobei der Befestigungsabschnitt (45) und der aktive Abschnitt (49) eine Umfangsausdehnung um eine Axialrichtung (X) aufweisen, welche in der zusammengebauten Konfiguration des Bremssattels mit einer Translationsrichtung einer Parkvorrichtung (2) übereinstimmt,
**dadurch gekennzeichnet, dass**
- jeder aktive Abschnitt (49) eine bogenförmige Ausdehnung aufweist, welche auf einem einzelnen Umfang liegt, und
- jeder Befestigungsabschnitt (45) eine bogenförmige Ausdehnung aufweist, welche auf einem weiteren einzelnen Umfang liegt, welcher größer ist, als der Umfang, auf welchem die aktiven Abschnitte (49) liegen.

2. Elastisches Drückelement (36) nach Anspruch 1,
wobei der Befestigungsabschnitt (45) und der aktive Abschnitt (49) in unterschiedlichen Ebenen relativ zur Axialrichtung (X) angeordnet sind und wobei der elastische Abschnitt (50) sich vorteilhafterweise gemäß einer geneigten Richtung relativ zur Axialrichtung (X) erstreckt.

3. Elastisches Drückelement (36) nach Anspruch 1 oder 2,
wobei der Befestigungsabschnitt (45) und der aktive Abschnitt (49) unterschiedliche transversale oder radiale Abmessungen im Vergleich zur Axialrichtung (X) aufweisen.

4. Elastisches Drückelement (36) nach Anspruch 3, wobei der Befestigungsabschnitt (45) eine höhere transversale oder radiale Abmessung als die transversale oder radiale Abmessung des aktiven Abschnitts (49) aufweist.

5. Elastisches Drückelement (36) nach einem der Ansprüche 1 bis 4,
wobei der Befestigungsabschnitt (45) und der aktive Abschnitt (49) zwei Umfänge (A, B) mit einem unterschiedlichen Durchmesser definieren.

6. Elastisches Drückelement (36) nach einem der vorhergehenden Ansprüche, wobei die Form des elastischen Drückelements (36) wenigstens theoretisch eine kegelstumpfförmige Fläche entlang einer Axialrichtung (X) definiert, welche in der zusammengebauten Konfiguration des Bremssattels mit einer Translationsrichtung einer Parkvorrichtung (2) übereinstimmt.

7. Elastisches Drückelement (36) nach einem der vorhergehenden Ansprüche, wobei das elastische Drückelement (36) durch einen gefalteten ausgestreckten Körper implementiert ist oder/und
wobei das elastische Drückelement (36) durch einen ausgestreckten Körper implementiert ist, welcher aus einem Draht, einem Blech oder einem Netz aus Metall ausgewählt ist, oder/und
wobei zwei oder mehrere Befestigungsabschnitte (45) und zwei oder mehrere aktive Abschnitte (49) bereitgestellt sind, welche entlang des ausgestreckten Körpers um eine Axialrichtung (X) aufeinanderfolgend gebildet sind und mit jeweiligen elastischen Abschnitten (50) durchsetzt sind.

8. Elastisches Drückelement (36) nach Anspruch 7,
wobei zwei oder mehrere Befestigungsabschnitte (45) und zwei oder mehrere aktive Abschnitte (49) bereitgestellt sind, welche entlang des ausgestreckten Körpers aufeinanderfolgend gebildet sind und mit jeweiligen elastischen Abschnitten (50) durchsetzt sind und am Umfang um eine Axialrichtung (X) verteilt sind.

9. Elastisches Drückelement (36) nach einem der Ansprüche 7 bis 8,
wobei jeder aktive Abschnitt (49) eine bogenförmige Ausdehnung aufweist, welche vorzugsweise auf einem einzelnen Umfang (B) liegt.

10. Elastisches Drückelement (36) nach Anspruch 9,
wobei jeder Befestigungsabschnitt (45) eine bogenförmige Ausdehnung aufweist, welche vorzugsweise auf einem einzelnen Umfang (A) liegt, welcher höher ist, als der Umfang, auf welchem die aktiven Abschnitte (49) liegen.

11. Elastisches Drückelement (36) nach Anspruch 9 oder 10,
wobei die elastischen Abschnitte (50) eine geradlinige Ausdehnung aufweisen.

12. Elastisches Drückelement (36) nach einem der Ansprüche 7 bis 11,
wobei der ausgestreckte Körper wenigstens eine erste Verbindungslänge (51) aufweist, welche zwischen einem Befestigungsabschnitt (45) und einem elastischen Abschnitt (50) angeordnet ist, und wenigstens eine zweite Verbindungslänge (52) aufweist, welche zwischen einem elastischen Abschnitt (50) und einem aktiven Abschnitt (49) angeordnet ist.

13. Elastisches Drückelement (36) nach einem der Ansprüche 7 bis 12,
wobei der ausgestreckte Körper eindeutige Enden (Y, Z) aufweist oder/und wobei die Enden (Y, Z) des ausgestreckten Körpers an einer vorgegebenen Entfernung angeordnet sind oder/und
wobei die zwei Enden (Y, Z) an einem Befestigungsabschnitt (45) angeordnet sind, welcher somit sich als teilweise unterbrochen erweist.

14. Kolben (34) für einen kombinierten oder hydromechanischen Scheibenbremssattel (1) mit automatischem Ausgleichen des Belagverschleißes, wobei der Kolben ein elastisches Drückelement (36) nach wenigstens einem der Ansprüche 1 bis 13 umfasst.

15. Kolben (34) nach Anspruch 14,
wobei der Kolben eine Aussparung (33) aufweist, welche dazu geeignet ist, ein Ende einer Komponente der Drückwelle (26) aufzunehmen, wobei die Aussparung (33) eine Einbuchtung (44) aufweist, welche dazu geeignet ist, wenigstens einen Befestigungsabschnitt (45) des elastischen Drückelements (36) aufzunehmen.

16. Kolben (34) nach Anspruch 15,
wobei die Einbuchtung (44) eine durchgehende Ringform aufweist.

17. Kombinierter oder hydromechanischer Bremssattel (1) einer Scheibenbremse mit automatischem Ausgleichen des Belagverschleißes, umfassend einen Kolben (34) nach einem oder mehreren der Ansprüche 14 bis 16.

18. Bremssattel (1) nach Anspruch 17,
umfassend einen Gewindestift (31) eines Drückmittels (7), wobei an einem Ende des Gewindestifts (31), welches einem Scheibenraum (4) und dem Kolben (34) zugewandt ist, ein Drückkopf (32) bereitgestellt ist, welcher dazu geeignet ist, in eine entsprechende Kopfauflage (33a) der Aussparung (33) des Kolbens (34) einzugreifen.

19. Bremssattel (1) nach Anspruch 17 oder 18,
wobei der Drückkopf (32) größere radiale oder transversale Abmessungen, als der Gewindestift (31) aufweist und vorzugsweise einen kegelstumpfförmigen Abschnitt (32a) umfasst, welcher zur Anlage mit einem entsprechenden kegelstumpfförmigen Abschnitt (33b) der Kopfauflage (33a) geeignet ist, oder/und
wobei der Drückkopf (32) eine axiale vordere Aufweitung (32b) umfasst, welche dazu geeignet ist, in einen entsprechenden zylindrischen Vorderabschnitt (33c) der Kopfauflage (33a) unter Zwischenschaltung eines Dichtungsrings (39) eingeführt zu werden, oder/und wobei die axiale vordere Aufweitung (32b) kleinere transversale oder radiale Abmessungen, als der kegelstumpfförmige Abschnitt (32a) aufweist und der zylindrische Vorderabschnitt (33c) der Kopfauflage (33a) kleinere transversale oder radiale Abmessungen, als der kegelstumpfförmige Abschnitt (33b) der Kopfauflage (33a) aufweist.

20. Bremssattel (1) nach einem der Ansprüche 17 bis 19,
wobei ein Drückkopf (32) und insbesondere ein kegelstumpfförmiger Abschnitt (32a) des Gewindestifts (31) wenigstens eine zu beiden Seiten offene Einbuchtung (40) aufweist.

21. Bremssattel (1) nach einem der Ansprüche 17 bis 20,
wobei das elastische Drückelement (36) zwischen dem Drückkopf (32) und dem Kolben (34) eingreift, wodurch der Drückkopf (32) in der Kopfauflage (33a) gedrückt gehalten ist, oder/und
wobei Antireibungsmittel, beispielsweise eine Scheibe (37) oder/und ein Lager (37a), zwischen dem elastischen Drückelement (36) und dem Drückkopf (32) eingefügt sind.

22. Bremssattel (1) nach einem der Ansprüche 17 bis 21,
umfassend eine Betätigungswelle eines Betätigungsmittels (8), wobei die Betätigungswelle eine Öffnung (38) umfasst, welche dazu geeignet ist, den Gewindestift (31) wenigstens teilweise aufzunehmen, oder/und umfassend eine Drückwelle (26) eines Drückmittels (7), wobei die Drückwelle eine Buchse (26a) umfasst, welche mit einer Auflage (30) für einen Gewindestift (31) vorgesehen ist, wobei die Auflage (30) zu beiden Seiten der Buchse (26a) offen ist.

23. Elastisches Drückelement (36) nach Anspruch 1 oder 9 oder 10, wobei die elastischen Abschnitte (50) eine bogenförmige Umfangsausdehnung aufweisen.

24. Elastisches Drückelement (36) nach Anspruch 1,
wobei der wenigstens eine Befestigungsabschnitt (45) dazu geeignet ist, direkt in eine Einbuchtung (44) des Kolbens (34) eingeführt zu werden.

## Revendications

1. Élément de poussée élastique (36) d'un étrier hydromécanique ou combiné (1) de frein à disque à compensation automatique de l'usure de plaquette, ledit élément de poussée élastique (36) étant apte à être intercalé entre un piston (34) dudit étrier (1) et une pièce (31) d'un arbre de poussée (26), ledit élément de poussée élastique (36) comprenant, en outre :
- au moins une partie de fixation (45),
- au moins une partie active (49) s'étendant depuis la partie de fixation (45),
- comprenant, en outre, au moins une partie élastique (50), au sens strict du terme, intercalée entre la partie de fixation (45) et la partie active (49),
- la partie de fixation (45) et la partie active (49) ayant une extension circonférentielle autour d'une direction axiale (X) qui, dans la configuration assemblée de l'étrier, coïncide avec une direction de translation d'un dispositif de stationnement (2),
**caractérisé en ce que**
- chaque partie active (49) a une extension arquée s'étendant sur une circonférence unique, et
- chaque partie de fixation (45) a une extension arquée s'étendant sur une circonférence unique supplémentaire qui est plus grande que la circonférence sur laquelle s'étendent les parties actives (49).

2. Élément de poussée élastique (36) selon la revendication 1, dans lequel la partie de fixation (45) et la partie active (49) sont agencées à différents niveaux relativement à la direction axiale (X), et la partie élastique (50) s'étend avantageusement selon une direction inclinée par rapport à la direction axiale (X).

3. Élément de poussée élastique (36) selon la revendication 1 ou 2, dans lequel la partie de fixation (45) et la partie active (49) ont des dimensions radiales ou transversales différentes par comparaison avec la direction axiale (X).

4. Élément de poussée élastique (36) selon la revendication 3, dans lequel la partie de fixation (45) a une dimension radiale ou transversale plus grande que la dimension radiale ou transversale de la partie active (49).

5. Élément de poussée élastique (36) selon l'une quelconque des revendications 1 à 4, dans lequel la partie de fixation (45) et la partie active (49) définissent deux circonférences (A, B) d'un diamètre différent.

6. Élément de poussée élastique (36) selon l'une des revendications précédentes, dans lequel la forme de l'élément de poussée élastique (36) définit, au moins en théorie, une surface tronconique le long d'une direction axiale (X) qui, dans la configuration assemblée de l'étrier, coïncide avec une direction de translation d'un dispositif de stationnement (2).

7. Élément de poussée élastique (36) selon l'une des revendications précédentes, dans lequel l'élément de poussée élastique (36) est mis en oeuvre par un corps étendu et plié et/ou l'élément de poussée élastique (36) est mis en oeuvre par un corps étendu sélectionné dans le groupe consistant en fil, tôle ou toile métallique et/ou deux parties de fixation (45), ou plus, et deux parties actives (49), ou plus, sont prévues, qui sont formées séquentiellement le long du corps étendu autour d'une direction axiale (X), et intercalées avec des parties élastiques (50) respectives.

8. Élément de poussée élastique (36) selon la revendication 7, dans lequel deux parties de fixation (45), ou plus, et deux parties actives (49), ou plus, sont prévues, qui sont formées séquentiellement le long du corps étendu, et intercalées avec des parties élastiques (50) respectives, et réparties de manière circonférentielle autour d'une direction axiale (X).

9. Élément de poussée élastique (36) selon l'une des revendications 7 et 8, dans lequel chaque partie active (49) a une extension arquée s'étendant, de préférence, sur une circonférence unique (B).

10. Élément de poussée élastique (36) selon la revendication 9, dans lequel chaque partie de fixation (45) a une extension arquée s'étendant, de préférence, sur une circonférence unique (A), qui est supérieure à la circonférence sur laquelle s'étendent les parties actives (49).

11. Élément de poussée élastique (36) selon la revendication 9 ou 10, dans lequel les parties élastiques (50) ont une extension rectiligne.

12. Élément de poussée élastique (36) selon l'une des revendications 7 à 11, dans lequel le corps étendu comprend au moins une première longueur de connexion (51) intercalée entre une partie de fixation (45) et une partie élastique (50), et au moins une seconde longueur de connexion (52) intercalée entre une partie élastique (50) et une partie active (49).

13. Élément de poussée élastique (36) selon l'une des revendications 7 à 12, dans lequel le corps étendu comporte des extrémités distinctes (Y, Z), et/ou les extrémités de corps étendu (Y, Z) sont agencées à une distance prédéterminée, et/ou les deux extrémités (Y, Z) sont agencées à une partie de fixation (45), qui se trouve donc en partie interrompue.

14. Piston (34) d'un étrier hydromécanique ou combiné (1) de frein à disque à compensation automatique de l'usure de plaquette, ledit piston comprenant un élément de poussée élastique (36) selon l'une au moins des revendications 1 à 13.

15. Piston (34) selon la revendication 14, dans lequel ledit piston comporte un évidement (33) qui est apte à recevoir une extrémité d'une pièce d'arbre de poussée (26), ledit évidement (33) comportant une encoche (44) apte à recevoir au moins une partie de fixation (45) de l'élément de poussée élastique (36).

16. Piston (34) selon la revendication 15, dans lequel l'encoche (44) a une forme annulaire continue.

17. Étrier hydromécanique ou combiné (1) de frein à disque à compensation automatique de l'usure de plaquette, comprenant un piston (34) selon l'une ou plusieurs des revendications 14 à 16.

18. Étrier (1) selon la revendication 17, comprenant une tige filetée (31) de moyen de poussée (7), dans lequel, au niveau de l'extrémité de tige filetée (31) tournée vers un espace de disque (4) et le piston (34) est prévue une tête de poussée (32) qui est apte à s'engager dans un siège de tête (33a) correspondant de l'évidement (33) de piston (34).

19. Étrier (1) selon la revendication 17 ou 18, dans lequel la tête de poussée (32) a des dimensions radiales ou transversales plus grandes que la tige filetée (31), et comprend, de préférence, une partie tronconique (32a) apte à buter contre une partie tronconique (33b) correspondante du siège de tête (33a), et/ou ladite tête de poussée (32) comprend un agrandissement avant axial (32b) apte à s'insérer dans une partie avant cylindrique (33c) correspondante du siège de tête (33a) en intercalant une bague d'étanchéité (39), et/ou ledit agrandissement avant axial (32b) a des dimensions radiales ou transversales plus petites que la partie tronconique (32a), et la partie avant cylindrique (33c) de siège de tête (33a) a des dimensions radiales ou transversales plus petites que la partie tronconique (33b) de siège de tête (33a).

20. Étrier (1) selon l'une quelconque des revendications 17 à 19, dans lequel une tête de poussée (32) et, en particulier, une partie tronconique (32a) de la tige filetée (31) comporte au moins une encoche (40) s'ouvrant sur les deux côtés.

21. Étrier (1) selon l'une quelconque des revendications 17 à 20, dans lequel l'élément de poussée élastique (36) opère entre la tête de poussée (32) et le piston (34), gardant la tête de poussée (32) pressée dans le siège de tête (33a), et/ou des moyens antifriction sont intercalés entre l'élément de poussée élastique (36) et la tête de poussée (32), par exemple une rondelle (37) et/ou un palier (37a).

22. Étrier (1) selon l'une des revendications 17 à 21, comprenant un moyen d'actionnement (8) sous la forme d'un arbre d'actionnement, dans lequel ledit arbre d'actionnement comprend un trou (38) apte à recevoir, au moins en partie, la tige filetée (31), et/ou comprenant un moyen de poussée (7) sous la forme d'un arbre de poussée (26), ledit arbre de poussée comprenant une douille (26a) pourvue d'un siège (30) pour une tige filetée (31), ledit siège (30) s'ouvrant sur les deux côtés de ladite douille (26a).

23. Élément de poussée élastique (36) selon la revendication 1 ou 9 ou 10, dans lequel les parties élastiques (50) ont une extension arquée circonférentielle.

24. Élément de poussée élastique (36) selon la revendication 1, dans lequel l'au moins une partie de fixation (45) est apte à s'insérer directement dans une encoche (44) du piston (34).
